# FASCICULE DE BREVET EUROPEEN

(11) **EP 1 503 953 B1**
(45) Date de publication et mention de la délivrance du brevet: **16.05.2007**
(21) Numéro de dépôt: 03746341.1
(22) Date de dépôt: 14.04.2003
(51) Int. Cl.: C01B 3/52, C01B 3/50, C01B 3/56, C01B 31/18, B01D 53/14, B01D 53/26, F25J 3/02

(54) **PROCEDE ET INSTALLATION DE SEPARATION D UN MELANGE D HYDROGENE ET DE MONOXYDE DE CARBONE**
VERFAHREN UND VORRICHTUNG ZUR TRENNUNG EINES GEMISCHS VON WASSERSTOFF UND KOHLENMONOXID
METHOD AND INSTALLATION FOR SEPARATING A MIXTURE OF HYDROGEN AND CARBON MONOXIDE

(30) Priorité: 15.04.2002 FR 0204681
(43) Date de publication de la demande: 09.02.2005
(73) Titulaire: L'AIR LIQUIDE, Société Anonyme pour l'Etude et l'Exploitation des Procédés Georges Claude, 75321 Paris Cedex 07 (FR)
(72) Inventeur: DUMONT, Eric, F-94220 Charenton-Le-Pont (FR); HERNANDEZ, Antoine, F-94380 Bonneuil-sur-Marne (FR)
(74) Mandataire: Mercey, Fiona Susan
(86) Numéro de dépôt international: PCT/FR2003/001174
(87) Numéro de publication internationale: WO 2003/086965

(56) Documents cités:
- EP-A- 0 359 629
- EP-A- 0 790 212
- GB-A- 1 217 706
- US-A- 3 864 465

## Description

La présente invention est relative à un procédé et à une installation de séparation d'un mélange d'hydrogène et de monoxyde de carbone. En particulier, elle concerne un procédé de séparation d'un tel mélange utilisant une étape de séparation par distillation cryogénique.

Les unités de production de monoxyde de carbone et d'hydrogène peuvent être séparées en deux parties :
- *génération du gaz de synthèse* (mélange contenant H₂, CO, CH₄, CO₂ et N₂ essentiellement). Parmi les diverses voies industrielles de production de gaz de synthèse, le reformage à la vapeur d'eau est la plus importante. La conception de cette unité qui comprend un four est basée sur les productions en CO et hydrogène requises.
- *purification du gaz de synthèse.* On retrouve :
   - une unité de lavage aux amines pour éliminer la plus grande partie du CO₂ contenue dans le gaz de synthèse
   - une unité d'épuration sur lit d'adsorbants. Cette unité comprend généralement deux bouteilles en fonctionnement continu, une en production, l'autre en phase de régénération.
   - une unité de traitement à basse température par un procédé cryogénique (boîte froide) pour produire du monoxyde de carbone et de l'hydrogène (dont éventuellement un mélange de monoxyde de carbone et d'hydrogène dit Oxogaz) aux débits et puretés requis par le client. Le procédé le plus fréquent est le lavage au méthane liquide qui permet d'obtenir du monoxyde de carbone pur avec un rendement de récupération pouvant atteindre 99 %, de l'hydrogène dont la teneur en CO varie généralement entre quelques ppm et 1 % et un gaz résiduaire riche en méthane utilisé comme combustible.

Des procédés de ce type sont décrits dans « Tieftemperaturtechnik » de Hausen et al., Springer-Veriag 1985 pp 417-419, EP-A-837031, EP-A-0359629, EP-A-0790212, EP-A-1245533 et GB-A-1217706.

L'équilibre thermodynamique de l'unité de génération de gaz de synthèse est favorisé par une basse pression qui se traduit par une consommation de matière première moins importante, alors que l'unité de purification de gaz de synthèse est favorisée par une haute pression en terme de taille d'équipements et de consommation électrique.

C'est pourquoi, et compte tenu de la limitation de la pression de fonctionnement des fours de reformage (qui opèrent à une pression inférieure à 45 bar abs.), il peut être avantageux et/ou nécessaire d'incorporer un compresseur de gaz de synthèse dans la chaîne de purification du gaz de synthèse.

Dans la plupart des cas, l'hydrogène produit par la boîte froide, contenant jusqu'à 1 % mol. de CO, est utilisé comme gaz de régénération de l'épuration, puis est envoyé vers une unité de purification par adsorbants (PSA) avant d'être acheminé vers le client final.

Dans le cas où l'hydrogène produit par la boîte froide est envoyé directement vers le client avec une spécification de la teneur en CO de quelques ppm, il n'est plus possible d'utiliser ce gaz comme gaz de régénération.

Dans le cas également où l'on produit un mélange de monoxyde de carbone et d'hydrogène contenant généralement 50 % d'hydrogène, la quantité d'hydrogène restante comme gaz résiduaire est trop faible pour régénérer l'épuration ; il est donc nécessaire de trouver un autre gaz comme gaz de régénération.

Une des solutions actuelles consiste à produire une quantité nécessaire d'hydrogène supplémentaire au niveau de l'unité de génération. Cet hydrogène contenu dans le gaz de synthèse est traité dans l'unité de purification et notamment dans l'unité de lavage au méthane, est ensuite utilisé comme gaz de régénération de l'épuration et enfin valorisé comme carburant.

Selon un objet de l'invention, il est prévu un procédé de production simultanée d'hydrogène et de monoxyde de carbone du type dans lequel on reçoit un gaz de synthèse, tel qu'un gaz de reformage d'hydrocarbures, contenant de l'hydrogène et du monoxyde de carbone provenant d'une unité de production de gaz de synthèse, on soumet le gaz de synthèse à une décarbonatation dans une unité de décarbonatation et à une dessiccation dans une unité de dessiccation, puis à une séparation cryogénique des constituants restants caractérisé en ce que l'on recycle un gaz contenant au moins 60 % d' hydrogène constitué par :
i) un gaz provenant de la séparation cryogénique et/ou
ii) une partie du gaz de synthèse
en amont de l'unité de décarbonatation et en aval de l'unité de production de gaz de synthèse.

Selon d'autres aspects facultatifs de l'invention,
- le gaz contenant au moins 60 % d'hydrogène est soutiré en tête d'une colonne de lavage au méthane de l'unité de séparation cryogénique, dans laquelle se séparent les constituants restants ;
- le gaz contenant au moins 60 % d'hydrogène est une partie du gaz le plus pur en hydrogène produit ;
- le gaz contenant au moins 60 % d'hydrogène sert à régénérer l'unité de dessiccation avant d'être envoyé en amont de l'unité de décarbonatation ;
- le gaz de synthèse épuré dans l'unité de décarbonatation est comprimé dans un compresseur avant d'être envoyé à l'unité de dessiccation ;
- un autre gaz enrichi en hydrogène est envoyé de la séparation cryogénique en amont du compresseur et en aval de l'unité de décarbonatation.

Selon un autre aspect de l'invention, il est prévu une installation de production simultanée d'hydrogène et de monoxyde de carbone comprenant une unité de production de gaz de synthèse, une unité de décarbonatation, une unité de dessiccation et une unité de séparation cryogénique, et des moyens reliant l'unité de production de gaz de synthèse avec l'unité de décarbonatation, l'unité de décarbonatation avec l'unité de dessiccation et l'unité de dessiccation avec l'unité de séparation cryogénique et des moyens de soutirage d'hydrogène et de monoxyde de carbone en tant que produits caractérisée en ce qu'elle comprend des moyens pour recycler un gaz contenant au moins 60 % d'hydrogène constitué par :
i) un gaz enrichi en hydrogène par rapport au gaz de synthèse de l'unité de séparation cryogénique et/ou
ii) une partie du gaz de synthèse
en amont de l'unité de décarbonatation et en aval de l'unité de production de gaz de synthèse.

Les moyens pour recycler le gaz sont de préférence reliés à la fois à un point en amont de l'unité de dessiccation et en aval de l'unité de production de gaz de synthèse et à l'unité de séparation cryogénique ou un point en amont de l'unité de séparation cryogénique.

Selon d'autres aspects facultatifs de l'invention, l'installation comprend :
- des moyens de compression en aval des moyens de décarbonatation.
- des moyens pour envoyer le gaz enrichi en hydrogène à l'unité de dessiccation.
- des moyens pour envoyer un gaz enrichi en hydrogène de la colonne d'épuisement en aval de l'unité de décarbonatation.

L'unité de séparation cryogénique peut comprendre une colonne de lavage au méthane, une colonne d'épuisement et une colonne de rectification et des moyens pour soutirer le gaz enrichi en hydrogène de la colonne de lavage au méthane. D'autres types d'unité peuvent être envisagés, tels qu'une unité à condensation partielle.

Dans le cas de la présence d'un compresseur de gaz de synthèse, l'innovation proposée consiste à mettre en place une boucle de recycle d'un gaz riche en hydrogène entre la boîte froide et l'amont de l'unité de lavage aux amines.

Ce gaz riche en hydrogène produit en sortie de la boîte froide par la colonne de lavage au méthane liquide, est utilisé comme gaz de régénération de l'épuration, est détendu et renvoyé à l'amont de l'unité de lavage aux amines pour être mélangé au gaz de synthèse provenant de l'unité de génération.

Aucun surplus d'hydrogène ne doit être produit.

Ceci a pour conséquence une diminution de la taille de l'unité de génération du gaz de synthèse de l'ordre de 5 à 15 %.

Un autre avantage est la récupération de la quantité de CO co-adsorbé dans l'unité de purification qui retourne dans la boucle de gaz de synthèse. Ceci a pour conséquence une augmentation du taux de récupération du monoxyde de carbone de l'ordre de 0,5 %.

Le gaz de flash de la boîte froide peut être également recyclé à l'amont du compresseur de gaz de synthèse afin d'améliorer le rendement en CO de l'unité.

Tous les pourcentages mentionnés dans ce document sont des pourcentages molaires et les pressions sont des pressions absolues.

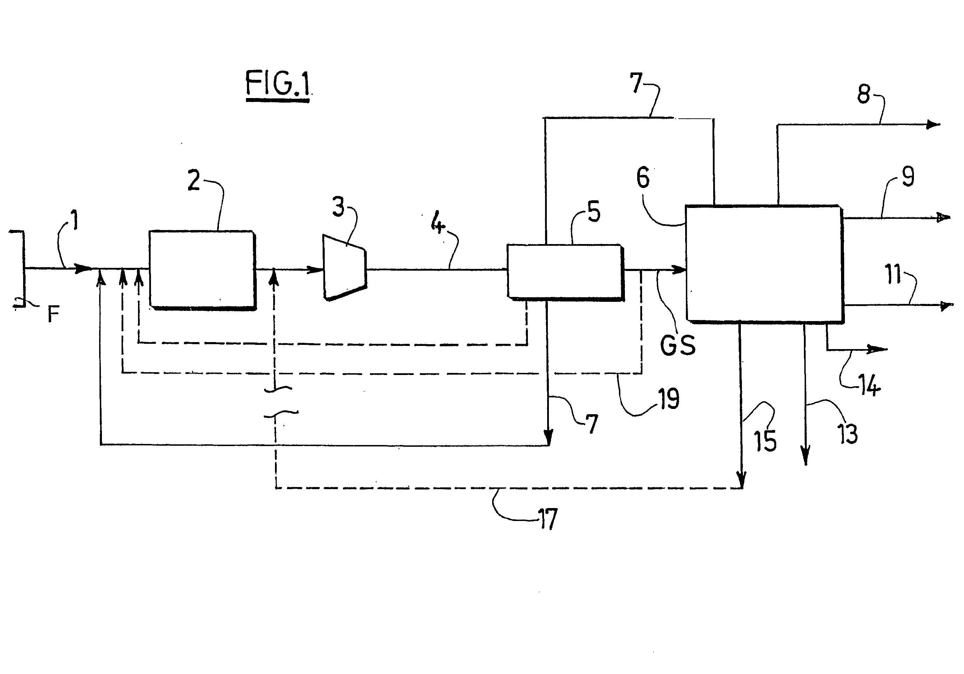

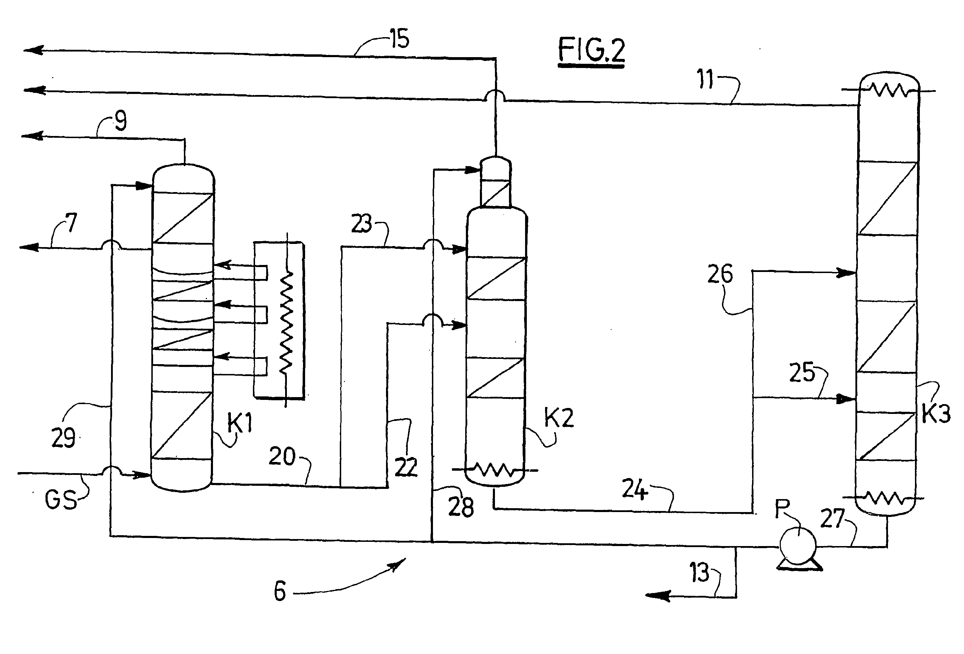

L'invention sera maintenant décrite plus en détail en se référant aux dessins, dont la Figure 1 représente schématiquement la séparation du gaz de synthèse par plusieurs étapes dont la séparation cryogénique et la Figure 2 représente un appareil de séparation cryogénique adapté à être intégré dans la Figure 1.

Dans la Figure 1, un débit 1 de gaz de synthèse à environ 16 bars provenant d'un four de reformage à la vapeur d'eau F est séparé dans une unité 2 de lavage aux amines afin d'enlever le dioxyde de carbone. Ce produit est ensuite comprimé dans un compresseur 3 jusqu'à une pression d'entre 18 et 43 bar abs. Le débit comprimé 4 est épuré en eau dans une unité d'épuration 5 pour produire un débit gazeux de 55500 Nm³/hr contenant 62 % d'hydrogène, moins d'un pour cent d'azote, 35 % de monoxyde de carbone et 3 % de méthane.

Ce débit est ensuite séparé dans un appareil de séparation cryogénique pour produire un produit gazeux 8 de 25400 Nm³/h constituant un mélange de monoxyde de carbone et d'hydrogène (typiquement 50 % d'hydrogène et un peu plus que 49 % de monoxyde de carbone), un produit gazeux 9 de 18700 Nm³/h riche en hydrogène (typiquement 99 % d'hydrogène), un produit gazeux 11 de 6500 Nm³/h riche en monoxyde de carbone (typiquement 99 % de monoxyde de carbone), une purge 13 de méthane, un gaz riche en hydrogène 7 et un gaz de flash 15 de 1300 Nm³/h (typiquement contenant 95 % d'hydrogène, 1 % de monoxyde de carbone et 4 % de méthane). Un débit de 1700 Nm³/h de gaz de paliers 14 contenant plus de 98 % d'hydrogène est envoyé à une turbine de détente.

Le débit 7 de 6800 Nm³/h est envoyé à l'unité d'épuration 5 dont il sert à régénérer un des lits d'adsorbants et ensuite, saturé en eau, il est mélangé avec le gaz de synthèse en amont de l'unité de lavage aux amines 2.

Optionnellement, une partie 17 du débit résiduaire 15 peut être recyclé en amont du compresseur 3 et en amont ou en aval de l'unité de lavage aux amines 2.

L'hydrogène produit pur 9 est directement vendu comme produit pur sans purification par un PSA. Les débits de gaz de flash 15 et de purge méthane 13 sont trop faibles pour la régénération de l'épuration 5. La purge méthane 13 peut avantageusement être envoyée à l'entrée du four F.

Ce recyclage de gaz riche en hydrogène 7 permet de diminuer la taille du four de reformage à la vapeur d'eau de près de 10 % et d'augmenter le rendement en CO de 0,5 %.

En variante ou en addition, une partie 19 du gaz de synthèse GS peut être séparée en aval de l'unité de dessiccation 5 et renvoyée en amont de l'unité de décarbonatation 2. Ce débit 19 peut également servir à régénérer l'unité de dessiccation 5 avant d'être mélangé avec le gaz de synthèse non traité 1.

Ceci a comme avantage de permettre la réduction de la taille de la boîte froide de l'unité de séparation cryogénique 6.

La Figure 2 représente un appareil de séparation de gaz de synthèse 6 par distillation cryogénique. Les débits ayant les mêmes chiffres de référence que ceux de la Figure 1 correspondent aux débits désignés dans la Figure 1. L'appareil comprend une colonne de lavage au méthane K1, une colonne d'épuisement K2 et une colonne de rectification K3. Le gaz de synthèse GS refroidi et épuré est envoyé en cuve de la colonne de lavage au méthane K1. Deux débits enrichis en hydrogène sont soutirés de la colonne, dont un débit 9 et un débit 7 soutiré quelques plateaux théoriques plus bas que le débit 9.

Le débit liquide 20 enrichi en méthane et monoxyde de carbone est séparé en un débit liquide 22 et un débit diphasique 23 et envoyé à la colonne K2. Le débit 23 est envoyé directement à la colonne K2 alors que le débit 22 est partiellement vaporisé (non-illustré) avant d'être envoyé à la colonne K2.

En tête de la colonne d'épuisement K2, un gaz 15 enrichi en hydrogène est soutiré. En cuve de la colonne d'épuisement K2, un débit 24 contenant principalement du monoxyde de carbone et du méthane est soutiré, sous-refroidi (non-illustré) et séparé en deux débits 25 et 26. Le débit 25 est envoyé directement à la colonne K3, le débit 26 est vaporisé (non-illustré) et envoyé à la colonne K3. Le produit riche en monoxyde de carbone 11 est soutiré en tête de la colonne K3. En cuve de la colonne K3 est soutiré un débit de méthane liquide 27 qui est ensuite pressurisé dans une pompe P, divisé en deux et envoyé en partie en tête de la colonne d'épuisement K2 et pour le reste en tête de la colonne de lavage au méthane K1, le débit 13 constituant le purge méthane.

Le rebouillage de cuve des colonnes K2,et K3 ainsi que la condensation en tête de colonne K3 est assuré par un cycle de monoxyde de carbone (non-illustré) de manière connue.

## Revendications

1. Procédé de production simultanée d'hydrogène et de monoxyde de carbone du type dans lequel on reçoit un gaz de synthèse, tel qu'un gaz de reformage d'hydrocarbures, contenant de l'hydrogène et du monoxyde de carbone provenant d'une unité de production de gaz de synthèse (F), on soumet le gaz de synthèse à une décarbonatation dans une unité de décarbonatation (2) et à une dessiccation dans une unité de dessiccation (5), puis à une séparation cryogénique dans une unité de séparation cryogénique (6) des constituants restants **caractérisé en ce que** l'on recycle un gaz contenant au moins 60 % d'hydrogène constitué par :
i) un gaz (7) provenant de la séparation cryogénique et/ou
ii) une partie (19) du gaz de synthèse
en amont de l'unité de décarbonatation et en aval de l'unité de production de gaz de synthèse.

2. Procédé selon la revendication 1 dans lequel le gaz (7) contenant au moins 60% d'hydrogène est soutiré en tête d'une colonne de lavage au méthane (K1) de l'unité de séparation cryogénique (6), dans laquelle se séparent les constituants restants.

3. Procédé selon la revendication 1 dans lequel le gaz contenant au moins 60% d'hydrogène est une partie du gaz le plus pur en hydrogène produit (7).

4. Procédé selon la revendication 1 ou 2 dans lequel le gaz contenant au moins 60 % d'hydrogène (7) sert à régénérer l'unité de dessiccation (5) avant d'être envoyé en amont de l'unité de décarbonatation.

5. Procédé selon l'une des revendications précédentes dans lequel le gaz de synthèse épuré dans l'unité de décarbonatation (2) est comprimé dans un compresseur (3) avant d'être envoyé à l'unité de dessiccation (5).

6. Procédé selon la revendication 5 dans lequel un autre gaz enrichi en hydrogène (17) est envoyé de la séparation cryogénique en amont du compresseur et en aval de l'unité de décarbonatation.

7. Installation de production simultanée d'hydrogène et de monoxyde de carbone comprenant des moyens pour recevoir un gaz de synthèse provenant d'une unité de production de gaz de synthèse (F), une unité de décarbonatation (1), une unité de dessiccation (5) et une unité de séparation cryogénique (6), et des moyens reliant l'unité de production de gaz de synthèse avec l'unité de décarbonatation, l'unité de décarbonatation avec l'unité de dessiccation et l'unité de dessiccation avec l'unité de séparation cryogénique et des moyens de soutirage d'hydrogène et de monoxyde de carbone en tant que produits **caractérisée en ce qu'**elle comprend des moyens pour recycler un gaz contenant au moins 60 % d'hydrogène constitué par :
i) un gaz enrichi en hydrogène, par rapport au gaz de synthèse, provenant de l'unité de séparation cryogénique et/ou
ii) une partie (19) du gaz de synthèse en amont de l'unité de décarbonatation (2) et en aval de l'unité de production de gaz de synthèse (F).

8. Installation selon la revendication 7 comprenant des moyens de compression (3) en aval des moyens de décarbonatation (2).

9. Installation selon la revendication 7 ou 8 comprenant des moyens pour envoyer le gaz enrichi en hydrogène à l'unité de dessiccation (5).

10. Installation selon la revendication 7, 8 ou 9 dans laquelle l'unité de séparation cryogénique (6) comprend une colonne de lavage au méthane (K1), une colonne d'épuisement (K2), une colonne de rectification (K3) et des moyens pour soutirer le gaz enrichi en hydrogène de la colonne de lavage au méthane.

11. Installation selon la revendication 10 comprenant des moyens pour envoyer un gaz (17) enrichi en hydrogène de la colonne d'épuisement (K2) en aval de l'unité de décarbonatation (2).

## Claims

1. Method for simultaneously producing hydrogen and carbon monoxide, of the type in which a synthesis gas is received, such as a gas from hydrocarbon reforming, containing hydrogen and carbon monoxide, from a synthesis gas production unit (F), the synthesis gas is decarbonated in a decarbonation unit (2), and desiccated in a desiccation unit (5), followed by cryogenic separation of the remaining components in a cryogenic separation unit (6), **characterized in that** a gas containing at least 60% hydrogen consisting of:
(i) a gas (7) from the cryogenic separation and/or
(ii) a portion (19) of the synthesis gas
is recycled upstream of the decarbonation unit and downstream of the synthesis gas production unit.

2. Method according to Claim 1, in which the gas (7) containing at least 60% hydrogen is withdrawn at the top of a methane scrubbing column (K1) of the cryogenic separation unit (6), in which the remaining components are separated.

3. Method according to Claim 1, in which the gas containing at least 60% hydrogen is a portion of the gas with the highest hydrogen purity produced (7).

4. Method according to Claim 1 or 2, in which the gas containing at least 60% hydrogen (7) is used to regenerate the desiccation unit (5) before being sent upstream of the decarbonation unit.

5. Method according to one of the preceding claims, in which the synthesis gas purified in the decarbonation unit (2) is compressed in a compressor (3) before being sent to the desiccation unit (5).

6. Method according to Claim 5, in which another gas enriched with hydrogen (17) is sent from the cryogenic separation upstream of the compressor and downstream of the decarbonation unit.

7. Installation for simultaneously producing hydrogen and carbon monoxide comprising means for receiving a synthesis gas from a synthesis gas production unit (F), a decarbonation unit (1), a desiccation unit (5) and a cryogenic separation unit (6), and means connecting the synthesis gas production unit with the decarbonation unit, the decarbonation unit with the desiccation unit and the desiccation unit with the cryogenic separation unit, and means for withdrawing hydrogen and carbon monoxide as products, **characterized in that** it comprises means for recycling a gas containing at least 60% hydrogen consisting of:
(i) a gas enriched with hydrogen, in comparison with the synthesis gas, from the cryogenic separation unit and/or
(ii) a portion (19) of the synthesis gas
upstream of the decarbonation unit (2) and downstream of the synthesis gas production unit (F).

8. Installation according to Claim 7, comprising compression means (3) downstream of the decarbonation means (2).

9. Installation according to Claim 7 or 8, comprising means for sending the hydrogen enriched gas to the desiccation unit (5).

10. Installation according to Claim 7, 8 or 9, in which the cryogenic separation unit (6) comprises a methane scrubbing column (K1), a stripping column (K2), a rectifying column (K3) and means for withdrawing the hydrogen enriched gas from the methane scrubbing column.

11. Installation according to Claim 10, comprising means for sending a gas (17) enriched with hydrogen from the stripping column (K2), downstream of the decarbonation unit (2).

## Patentansprüche

1. Verfahren zur gleichzeitigen Herstellung von Wasserstoff und Kohlenmonoxid von der Art, bei der ein Synthesegas, wie etwa ein Reformgas aus Kohlenwasserstoffen, das Wasserstoff und Kohlenmonoxid enthält, aufgenommen wird, das aus einer Synthesegasherstellungseinheit (F) stammt, wobei das Synthesegas einer Entcarbonisierung in einer Entcarbonisierungseinheit (2) und einer Trocknung in einer Trocknungseinheit (5), die verbleibenden Bestandteile dann einer Tieftemperaturtrennung in einer Tieftemperaturtrennungseinheit (6) unterzogen werden, **dadurch gekennzeichnet, dass** ein Gas recycelt wird, das mindestens 60 % Wasserstoff enthält, gebildet aus:
i) einem Gas (7), das aus der Tieftemperaturtrennung stammt und/oder
ii) einem Teil (19) des Synthesegases
stromaufwärts der Entcarbonisierungseinheit und stromabwärts der Herstellungseinheit des Synthesegases.

2. Verfahren nach Anspruch 1, wobei das Gas (7), das mindestens 60 % Wasserstoff enthält, am Kopf einer Methanwaschsäule (K1) der Tieftemperaturtrennungseinheit (6) abgezogen wird, in der sich die verbleibenden Bestandteile trennen.

3. Verfahren nach Anspruch 1, wobei das Gas, das mindestens 60 % Wasserstoff enthält, ein Teil des mit der höchsten Wasserstoffreinheit produzierten Gases (7) ist.

4. Verfahren nach Anspruch 1 oder 2, wobei das Gas, das mindestens 60 % Wasserstoff (7) enthält, dazu dient, die Trocknungseinheit (5) zu regenerieren bevor es stromaufwärts der Entcarbonisierungseinheit geschickt wird.

5. Verfahren nach einem der vorherigen Ansprüche, wobei das in der Entcarbonisierungseinheit (2) gereinigte Synthesegas in einem Verdichter (3) komprimiert wird bevor es in die Trocknungseinheit (5) geschickt wird.

6. Verfahren nach Anspruch 5, wobei ein anderes Gas, das mit Wasserstoff (17) angereichert ist, von der Tieftemperaturtrennung stromaufwärts des Verdichters und stromabwärts der Entcarbonisierungseinheit geschickt wird.

7. Vorrichtung zur gleichzeitigen Herstellung von Wasserstoff und Kohlenmonoxid, die Mittel zur Aufnahme eines Synthesegases umfasst, das aus einer Synthesegasherstellungseinheit (F), einer Entcarbonisierungseinheit (1), einer Trocknungseinheit (5) und einer Tieftemperaturtrennungseinheit (6) stammt, und Mittel, die die Synthesegasherstellungseinheit mit der Entcarbonisierungseinheit, die Entcarbonisierungseinheit mit der Trocknungseinheit und die Trocknungseinheit mit der Tieftemperaturtrennungseinheit verbinden, und Mittel zum Abziehen von Wasserstoff und Kohlenmonoxid als Produkte, **dadurch gekennzeichnet, dass** sie Mittel zum Recyceln eines Gases umfasst, das mindestens 60 % Wasserstoff enthält, gebildet aus:
i) einem im Verhältnis zum Synthesegas mit Wasserstoff angereicherten Gas, das aus der Tieftemperaturtrennungseinheit stammt und/oder
ii) einem Teil (19) des Synthesegases
stromaufwärts der Entcarbonisierungseinheit (2) und stromabwärts der Synthesegasherstellungseinheit (F).

8. Vorrichtung nach Anspruch 7, die Verdichtungsmittel (3) stromabwärts der Entcarbonisierungsmittel (2) umfasst.

9. Vorrichtung nach Anspruch 7 oder 8, die Mittel umfasst, um das mit Wasserstoff angereicherte Gas zur Trocknungseinheit (5) zu schicken.

10. Vorrichtung nach Anspruch 7, 8 oder 9, wobei die Tieftemperaturtrennungseinheit (6) eine Methanwaschkolonne (K1), eine Abtriebskolonne (K2), eine Rektifikationskolonne (K3) und Mittel umfasst, um das mit Wasserstoff angereicherte Gas von der Methanwaschkolonne abzuziehen.

11. Vorrichtung nach Anspruch 10, die Mittel umfasst, um ein Gas (17), das mit Wasserstoff angereichert ist, von der Abtriebskolonne (K2) stromabwärts der Entcarbonisierungseinheit (2) zu schicken.
